# EUROPEAN PATENT SPECIFICATION

(11) **EP 4 301 681 B1**
(45) Date of publication and mention of the grant of the patent: **20.11.2024**
(21) Application number: 21835864.6
(22) Date of filing: 22.12.2021
(51) Int. Cl.: B65G 47/51, B65G 1/14

(54) **SYSTEM OF AUTOMATED COLUMNS FOR VERTICAL WAREHOUSES**
AUTOMATISCHES SÄULENSYSTEM FÜR VERTIKALE LAGERHÄUSER
SYSTÈME DE COLONNES AUTOMATISÉES POUR ENTREPÔTS VERTICAUX

(30) Priority: 05.03.2021 EP 21020126
(43) Date of publication of application: 10.01.2024
(73) Proprietor: Laudani, Pietro, 59-700 Boleslawiec (PL)
(72) Inventor: Laudani, Pietro, 59-700 Boleslawiec (PL)
(74) Representative: Bruni, Giovanni
(86) International application number: PCT/IB2021/062194
(87) International publication number: WO 2022/185118

(56) References cited:
- WO-A1-2019/008607
- DE-A1- 19 935 962
- DE-U1- 202013 100 674
- FR-A1- 2 968 290
- EMANUELE DI BIASE: "Contenitori metallici Metallic racks Carpenterie in genere Metal carpentry Torneria automatica Automatic turning Sabbiatura Sandblasting Plastificazione Plastification Contenitori metallici", 9 September 2016 (2016-09-09), XP055456305, Retrieved from the Internet <URL:https://www.slideshare.net/EmanueleDiBiase/eurocontainers-italia> [retrieved on 20180305]
- ANONYMOUS: "Reduction drive - Wikipedia", WIKIPEDIA.ORG, 5 December 2020 (2020-12-05), pages 1 - 3, XP055833527, Retrieved from the Internet <URL:https://en.wikipedia.org/w/index.php?title=Reduction_drive&oldid=992474571> [retrieved on 20210819]

## Description

### Technical field of the invention

Object of the present invention is an automated columns system for vertical warehouses for storing and retrieving materials. The columns system, according to the present invention, can be used, by way of example and not limited to, in the "automotive" logistics sector.

### Backaround art

In the field of production system logistics, ergonomic high-bay warehouses, in which materials, semi-finished products or goods can be stored and retrieved as required, are known.

Are known examples of a vertical warehouse comprising a number of columns which face each other to allow the positioning of supports or shelves where the goods to be stored can be placed. The minimum number of columns for a vertical warehouse is two, preferably four, but this number obviously varies according to the type of warehouse.

The use of vertical warehouses makes it possible to realise a long series of benefits, among which the following should be mentioned the optimisation of space utilisation, both vertical and horizontal; the possibility of increasing the frequency of hourly picking and storage operations; the reduction of errors during picking and storage operations; greater safety and improved ergonomics for warehouse operators; better protection of goods and easier monitoring of stored goods; easier handling of goods; the possibility of integrating and connecting the vertical warehouse with company management information systems, for example, with an "Enterprise Resource Planning" (ERP).

An example is the document DE19935962 that describes a device for lifting articles (2) as a stack has bearers (9, 11) on which are fitted holders (13) for the articles. These can be slid along the bearers to alter their position. In particular, DE19935962 discloses a system according to the preamble of claim 1.

Another example is the document FR2968290 that describes a unit that has four uprights fixed on a lower plate, where each uprights carries a wheel. A chain is wound on the wheel to form two strands extending vertically along the uprights. An end of one of the two strands is connected to a spring. An end of the chain is connected to a frame, where the chain comprises a tab, where tab projects into loading space parts to serve as support and wedging units for an edge of the unit. A further document is WO2019/008607 that describes a load/unload system for vertical warehouses, which allows physical effort to be reduced and as a consequence a better quality of work for operators, as well as a reduction of load/unload times.

Known warehouses have the disadvantage that they require handling mechanisms, such as hydraulic or electronic mechanisms, for each column and therefore require the presence of several operators or a synchronisation between the movements of the individual columns to be managed by an operator. This makes the goods handling process long and laborious.

In addition, the columns according to the known technique can only move downhill. In other words, the movement of the supports, with which each column is equipped and on which the goods are placed, only takes place in the downward direction. In fact, it is difficult to move in the opposite direction, i.e. upwards, as the transmission mechanisms must overcome the weight force (of the supported goods) weighing on the column supports. Therefore, in the known columns, the movement of the supports is always carried out with the supports unloaded.

There is therefore a need to define an automated column system that is free from the above-mentioned drawbacks.

### Summary of the invention

The aim of the present invention is therefore an innovative automated column system for vertical storage applications. The aim is achieved by designing the column system in such a way that the movement of the columns is synchronised automatically. The synchronisation takes place by means of a plurality of joints controlled by an electrical or mechanical drive.

In addition, an innovative motion transmission system allows the reversal of the motion of the supports of the column and the possibility to move the supports also uphill in the presence of a load on them.

These and other purposes and advantages are achieved, according to the invention, by an innovative automated column system for vertical warehouses, having the features set forth in the appended independent claim.

Further preferred and/or particularly advantageous embodiments of the invention are described according to the features disclosed in the appended dependent claims.

### Brief description of the drawings

The invention will now be described with reference to the appended drawings, which illustrate a non-limiting example implementation, wherein:
- figure 1 is a plan view of an automated pillar system, according to an aspect of the present invention,
- figure 2 is a side view of the column, according to an embodiment of the present invention,
- figure 3 is a front view of the column of figure 2,
- figure 4 is an enlarged scale detail of the lower portion of the column of figure 2, and
- figure 5 is an enlarged scale detail of the upper portion of the figure 2 column.

### Detailed description

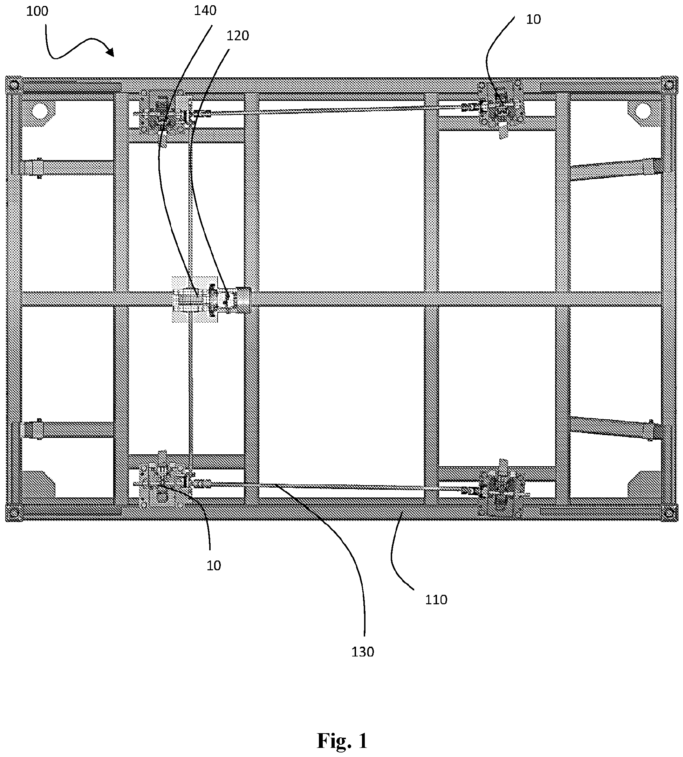

With reference to figure 1, a system of automated columns is indicated with the reference 100. The system is suitable for vertical warehouses, used for the storage and transport of industrial products. The automated columns 10 must be at least two in number and facing each other, but according to a preferred embodiment illustrated in figure 1 they are four in number. Naturally, if the logistics of the warehouse require it, the number of columns can also be higher, for example six or eight.

The automated columns 10 can be connected to each other according to the need and the type of product to be stored or transported, by means of a framed structure 110, which preferably takes on a parallelepiped configuration in the three directions of the space. At the centre between the columns 10 there may be an electric drive 120 preferably powered at 24 volts and connected to a number of mechanical transmissions, preferably cardan joints 130, equal to the number of columns 10. In the example of figure 1 this number is four. The use of the central electric drive 120 and the mechanical transmissions allows all four columns 10 to be operated simultaneously. The control of the drive motor can be automated remotely.

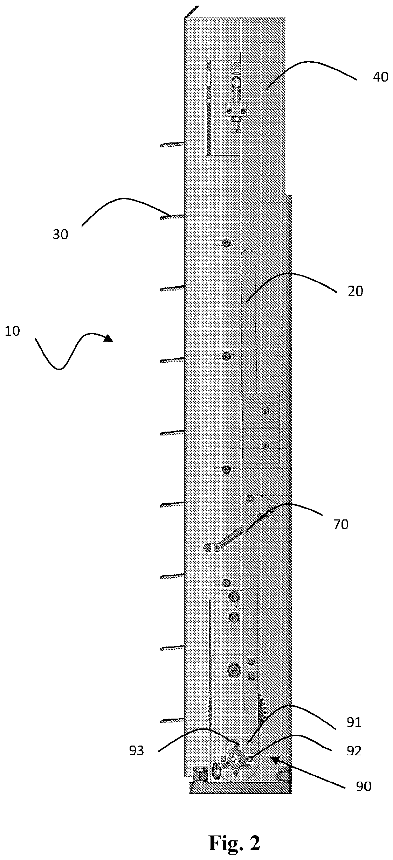

With reference to figure 2, as an alternative to the electric drive, the universal joints 130 are actuated by means of two pairs of pedals (of known type and therefore not shown in the figure), a first pair of pedals on one side of the framed structure 110, a second pair of pedals on the opposite side. For each pair of pedals, a first pedal actuates the columns 10 on the way up, the second pedal actuates them on the way down. The presence of two pairs of pedals is linked to the fact that the columns must move two by two clockwise (a first pair) and counterclockwise (a second pair facing the first pair) to perform the same upward or downward movement of the supports carrying the goods.

According to a further embodiment of the invention and with reference to figure 2, the control of the universal joints 130 and, therefore of the columns 10 is achieved by means of two pairs of levers 20, a first pair of levers on columns 10 of one side of the framed structure 110, a second pair of levers on the opposite side. For each pair of levers, a first lever actuates the columns 10 for ascending, while a second lever, mounted symmetrically with respect to the first lever actuates the columns 10 for descending. The presence of two pairs of levers is linked to the fact that the columns must move two by two clockwise (a first pair) and anticlockwise (a second pair facing the first pair) in order to perform the same upward or downward movement of the supports carrying the goods.

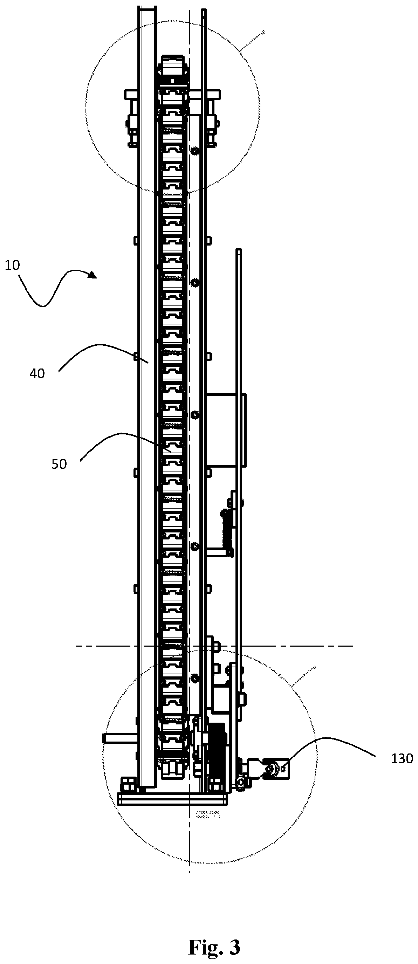

Still with reference to figure 2, each of the automated columns 10 comprises a box structure 40 with an almost square cross-section, fixed to a base plate and formed by two vertical side walls in stainless steel or aluminium or similar. In the same figure 2, a plurality of supports 30 can be seen which move, by means of a transmission system 50 (visible in figure 3), to move the goods of the vertical warehouse. The transmission system 50, for example a chain 50, according to known technique comprises a plurality of dowels which are fixed by means of rivets to the central structure of the chain. The chain 50 can accommodate a variable number of supports 30 capable of supporting the elements (goods, general cargo, etc.) that will be loaded by the operator onto the vertical magazine.

Supports 30 are advantageously made of polyethylene (or polyzene), which is a very light material and widely used in a wide variety of industries. It is used for the production of equipment for the chemical industry, bins and containers, slides and sliding elements, guides and the like. The advantage of using polythene instead of traditional steel is that it is highly resistant to chemicals, water, salt solutions, acids, alkalis, alcohol and petrol. In addition, polyzene is a material with high impact strength (even at low temperatures) and low friction coefficient, with excellent non-stick properties.

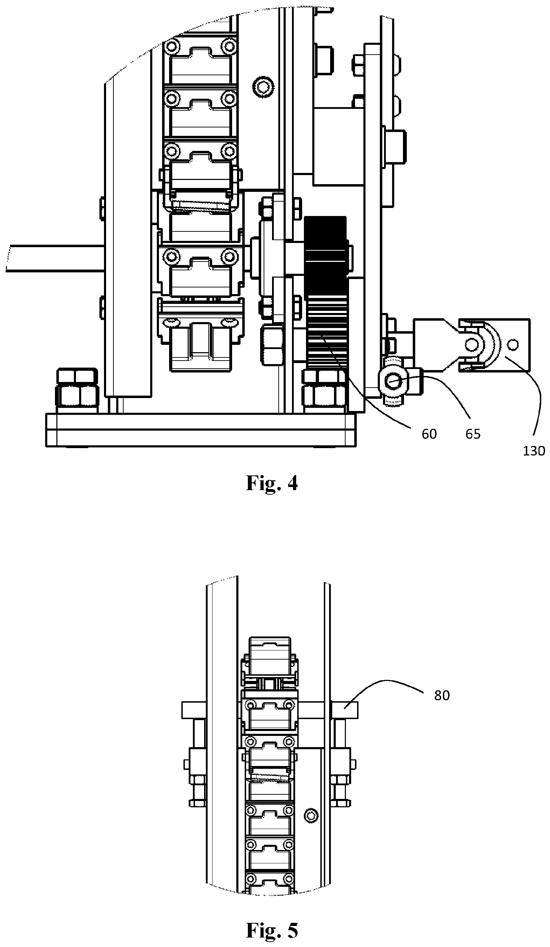

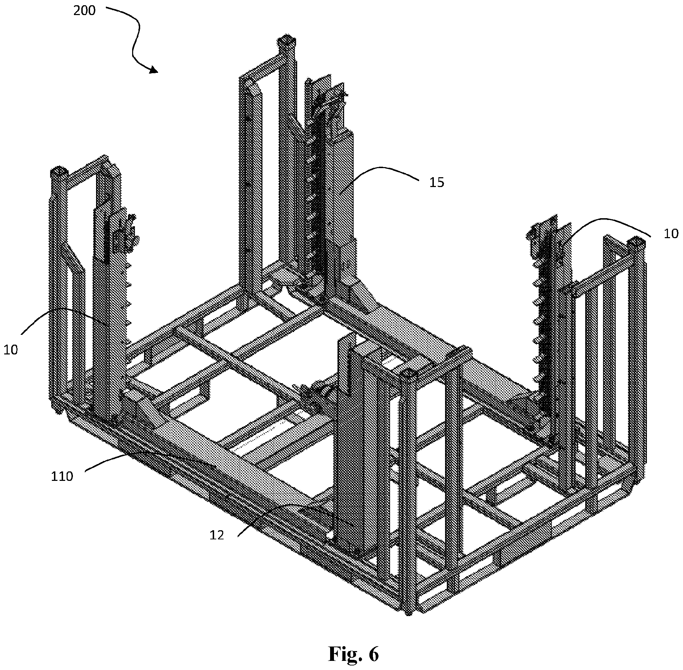

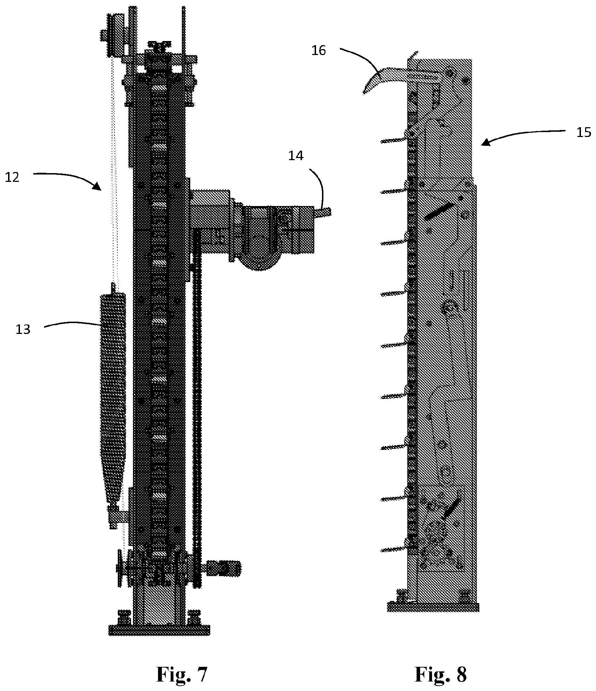

With reference to figures 2 to 5, the motion of the supports 30 of the columns 10 is realized as follows.

The drive of the electric drive 120 or of the pedal or of the lever 20 is transferred by the cardan joints 130 to a lower gear 60, preferably constituted by a pinion - crown gear coupling. From the lower gear 60 by means of a lever system 70, motion is transferred to an upper gear 80. The lower and upper gears are coupled to the transmission system (preferably the chain 50) that moves the supports 30. The lever system 70 has the function of synchronising the pitch of each automated column 10 during the loading of the elements by the operators.

A drum assembly 90 comprising a drum 91 and a double plurality of spring pins 92, 93 is positioned in proximity to the lower gear 60, the plurality of spring pins 93 being of greater length than the plurality of spring pins 92. This double plurality of spring pins 92,93 has the function of determining the pitch of the drum 91 and, consequently, the advancement of the supports 30 mounted on the transmission chain 50, when goods are loaded onto the supports 30 by the operator of the vertical warehouse. According to a preferred form of implementation, the pitch of the drum 91 calculated in millimetres is dedetermined by varying one or more spring pins so as to change the transmission ratio of the lower gear 60. The feasible pitches are, preferably: 25mm, 50mm, 75mm, 100mm and 200mm.

In the case of mechanical actuation by means of a pedal or lever, a counter for the number of pieces is set to trigger a limit stop 140. In the case of electrical operation by means of the geared motor, the pieces are counted automatically and the geared motor will stop at the set time.

The operation of the automated column 10 is as follows: the supports 30 move from the top to the bottom (and vice versa, as we shall see below), according to the pitch set on the drum assembly 90 and, once they reach the height of the lower gear 60, they rotate downwards, hiding inside the automated column 10.

The operator has the possibility to manually stop the descent of the supports 30 by acting on the limit stop 140. The limit stop will block the movement of the transmission chain 50 preventing the descent of the supports 30.

Moreover, the present invention, as will be better explained below, allows the columns to be moved both uphill and downhill, contrary to what happens in the case of the columns according to the known technique which have the possibility to move only downhill. In fact, as already mentioned, the columns support the goods to be stored or handled by means of a plurality of supports.

Such supports need to be moved either upwards or downwards, depending on the handling requirements.

The present invention makes it possible to move the supports 30 uphill (i.e. upwards) even if they are under load with the goods resting on them. The problem of overcoming the weight force of the goods during upward movement is solved by adopting a suitable transmission ratio between a bevel gear pair 65, located near the lower gear 60, and between the pinion and the crown gear of the lower gear 60. The overall gear ratio is chosen so as to reduce the speed and increase the transmissible torque to overcome the weight of the loads on the supports 30.

The reversal of the motion is realised thanks to the relative positioning between the operating lever 20 and the lever system 70: depending on their relative position, one direction of rotation of the transmission chain or the opposite direction can be realised. This is a peculiar feature of the invention not found in examples of columns in the state of the art.

The columns can be inclined in order to vary the useful load length and to accommodate complexly shaped goods that may therefore not interpenetrate and/or hinder each other. Advantageously, the inclination of the columns can be up to 35° in relation to a vertical axis. Although at least one exemplary embodiment has been presented in the summary and detailed descriptions, it must be understood that there are a large number of variants falling within the scope of protection of the invention. Furthermore, it must be understood that the embodiment(s) presented are merely examples. Rather, the summary and detailed descriptions provide a convenient guide for the skilled person in the art to implement at least one exemplary embodiment, it being clear that numerous variations can be made in the function and assembly of the elements described herein, without exceeding the scope of protection of the invention as set forth in the appended claims.

## Claims

1. System (100, 200) of automated columns for a vertical warehouse comprising:
- a plurality of automated columns (10) integrally connected to a framed structure (110), the number of columns (10) being always even, each of said plurality of automated columns comprising in turn a transmission member (50) which rotates around an upper gear assembly (80) and a lower gear assembly (60) and a plurality of supports (30), supported by the transmission member (50), which translate from top to bottom and vice versa by the rotational movement of the transmission member (50),
- a pneumatic/electrical or mechanical drive
- a plurality of mechanical transmissions (130) in a number equal to the number of columns (10), wherein
- the pneumatic/electrical or mechanical drive and mechanical transmissions (130) synchronize the upward or the downward movement of the plurality of supports (30) that support corresponding components to be stored,
the system (100) of automated columns being **characterized in that** the plurality of mechanical transmissions comprises a corresponding plurality of cardan joints (130), wherein
- a first column (12) of the plurality of columns (10) is provided with a damper element (13) for braking the downward motion of the supports (30) during the load step of the components to be stored, and
- said damper element (13) is a helical spring with variable stiffness, provided with a double taper.

2. System (200) according to claim 1, in which the first column (12) includes a crank (14) which operates the mechanical drive of the upward motion of the supports (30).

3. System (200) according to claim 1 or 2, in which a second column (15) of the plurality of columns (10) is provided with a lever mechanism (16) for the automatic mechanical actuation of the downward motion of the supports (30).

4. System (200) according to any of claims from 1 or 2, wherein a second column (15) of the plurality of columns (10) is provided with a handle for the mechanical actuation of the downward motion of the supports (30).

5. System (200) according to claim 3 or 4, wherein the first column (12) and the second column (15) are positioned on a pair of opposite vertices along a diagonal of the framed structure (110).

6. System (100, 200) according to any of the preceding claims, in which the pneumatic/electrical drive is operated by means of a pneumatic/electrical gear motor (120).

7. System (100, 200) according to any of the preceding claims, **characterized in that** the plurality of automated columns (10) assumes an inclination with respect to a vertical axis up to 35°.

8. System (100, 200) according to any of the preceding claims, **characterized in that** it comprises a counter for the number of components resting on the plurality of supports (30) configured in such a way as to trigger an end stop (140).

9. System (100, 200) according to any of the preceding claims, in which one or more columns of the plurality of columns (10) is positioned misaligned with respect to the other columns (10) with an offset angle ranging from 0° to 30°.

## Patentansprüche

1. System (100, 200) automatisierter Säulen für ein Vertikallager, umfassend:
eine Vielzahl automatisierter Säulen (10), die integral mit einer Rahmenstruktur (110) verbunden sind, wobei die Anzahl der Säulen (10) immer gerade ist, wobei jede der mehreren automatisierten Säulen wiederum ein Übertragungselement (50) umfasst, das sich um eine obere Getriebebaugruppe (80) und eine untere Getriebebaugruppe (60) dreht, sowie mehrere Träger (30), die vom Übertragungselement (50) getragen werden und sich durch die Drehbewegung des Übertragungselements (50) von oben nach unten und umgekehrt verschieben,
- ein pneumatischer/elektrischer oder mechanischer Antrieb
- eine Vielzahl mechanischer Getriebe (130) in einer Anzahl, die der Anzahl der Säulen (10) entspricht, wobei
- der pneumatische/elektrische oder mechanische Antrieb und die mechanischen Getriebe (130) synchronisieren die Aufwärts- oder Abwärtsbewegung der mehreren Träger (30), die entsprechende zu lagernde Komponenten tragen,
wobei das System (100) automatisierter Kolonnen **dadurch gekennzeichnet ist, dass** die mehreren mechanischen Getriebe eine entsprechende Vielzahl von Kardangelenken (130) umfassen, wobei
- eine erste Säule (12) der mehreren Säulen (10) ist mit einem Dämpferelement (13) zum Abbremsen der Abwärtsbewegung der Träger (30) beim Lastschritt der zu lagernden Bauteile versehen, und
- das Dämpferelement (13) eine Schraubenfeder mit variabler Steifigkeit ist, die mit einer doppelten Verjüngung versehen ist.

2. System (200) nach Anspruch 1, bei dem die erste Säule (12) eine Kurbel (14) umfasst, die den mechanischen Antrieb der Aufwärtsbewegung der Träger (30) betätigt.

3. System (200) nach Anspruch 1 oder 2, bei dem eine zweite Säule (15) der mehreren Säulen (10) mit einem Hebelmechanismus (16) zur automatischen mechanischen Betätigung der Abwärtsbewegung der Stützen versehen ist (30).

4. System (200) nach einem der Ansprüche 1 oder 2, wobei eine zweite Säule (15) der mehreren Säulen (10) mit einem Griff zur mechanischen Betätigung der Abwärtsbewegung der Stützen (30) versehen ist.

5. System (200) nach Anspruch 3 oder 4, wobei die erste Säule (12) und die zweite Säule (15) auf einem Paar gegenüberliegender Scheitelpunkte entlang einer Diagonale der Rahmenstruktur (110) positioniert sind.

6. System (100, 200) nach einem der vorhergehenden Ansprüche, bei dem der pneumatisch/elektrische Antrieb mittels eines pneumatisch/elektrischen Getriebemotors (120) betrieben wird.

7. System (100, 200) nach einem der vorhergehenden Ansprüche, **dadurch gekennzeichnet, dass** die Mehrzahl automatisierter Säulen (10) eine Neigung gegenüber einer vertikalen Achse von bis zu 35° einnimmt.

8. System (100, 200) nach einem der vorhergehenden Ansprüche, **dadurch gekennzeichnet, dass** es einen Zähler für die Anzahl der auf den mehreren Trägern (30) aufliegenden Bauteile aufweist, der so ausgebildet ist, dass er einen Endanschlag (140) auslöst).

9. System (100, 200) nach einem der vorhergehenden Ansprüche, bei dem eine oder mehrere Säulen der Mehrzahl von Säulen (10) in Bezug auf die anderen Säulen (10) mit einem Versatzwinkel im Bereich von 0° falsch ausgerichtet positioniert sind bis 30°.

## Revendications

1. Système (100, 200) de colonnes automatisées pour entrepôt vertical comprenant :
une pluralité de colonnes automatisées (10) reliées intégralement à une structure à charpente (110), le nombre de colonnes (10) étant toujours pair, chacune de ladite pluralité de colonnes automatisées comprenant à son tour un élément de transmission (50) qui tourne autour d'un support supérieur un ensemble d'engrenages (80) et un ensemble d'engrenages inférieur (60) et une pluralité de supports (30), supportés par l'élément de transmission (50), qui se traduisent de haut en bas et vice versa par le mouvement de rotation de l'élément de transmission (50 ),
- un entraînement pneumatique/électrique ou mécanique
- une pluralité de transmissions mécaniques (130) en nombre égal au nombre de colonnes (10), dans lequel
- l'entraînement pneumatique/électrique ou mécanique et les transmissions mécaniques (130) synchronisent le mouvement vers le haut ou vers le bas de la pluralité de supports (30) qui supportent les composants correspondants à stocker,
le système (100) de colonnes automatisées étant **caractérisé en ce que** la pluralité de transmissions mécaniques comprend une pluralité correspondante de joints à cardan (130), dans lequel
- une première colonne (12) de la pluralité de colonnes (10) est dotée d'un élément amortisseur (13) pour freiner le mouvement vers le bas des supports (30) pendant l'étape de chargement des composants à stocker, et
- ledit élément amortisseur (13) est un ressort hélicoïdal à raideur variable, muni d'une double conicité.

2. Système (200) selon la revendication 1, dans lequel la première colonne (12) comprend une manivelle (14) qui actionne l'entraînement mécanique du mouvement ascendant des supports (30).

3. Système (200) selon la revendication 1 ou 2, dans lequel une deuxième colonne (15) de la pluralité de colonnes (10) est dotée d'un mécanisme à levier (16) pour l'actionnement mécanique automatique du mouvement vers le bas des supports (30).

4. Système (200) selon l'une quelconque des revendications 1 ou 2, dans lequel une deuxième colonne (15) de la pluralité de colonnes (10) est munie d'une poignée pour l'actionnement mécanique du mouvement vers le bas des supports (30).

5. Système (200) selon la revendication 3 ou 4, dans lequel la première colonne (12) et la deuxième colonne (15) sont positionnées sur une paire de sommets opposés le long d'une diagonale de la structure encadrée (110).

6. Système (100, 200) selon l'une quelconque des revendications précédentes, dans lequel l'entraînement pneumatique/électrique est actionné au moyen d'un moto-réducteur pneumatique/électrique (120).

7. Système (100, 200) selon l'une quelconque des revendications précédentes, **caractérisé en ce que** la pluralité de colonnes automatisées (10) prend une inclinaison par rapport à un axe vertical allant jusqu'à 35°.

8. Système (100, 200) selon l'une quelconque des revendications précédentes, **caractérisé en ce qu'**il comprend un compteur du nombre de composants reposant sur la pluralité de supports (30) configuré de manière à déclencher une butée (140).

9. Système (100, 200) selon l'une quelconque des revendications précédentes, dans lequel une ou plusieurs colonnes de la pluralité de colonnes (10) sont positionnées mal alignées par rapport aux autres colonnes (10) avec un angle de décalage allant de 0° à 30°.
